# EUROPÄISCHE PATENTANMELDUNG

(11) **EP 1 026 904 A2**
(43) Veröffentlichungstag der Anmeldung: **09.08.2000**
(21) Anmeldenummer: 99440146.1
(22) Anmeldetag: 18.06.1999
(51) Int. Cl.: H04Q 3/00

(54) **Dienstbereitstellungssystem**

(30) Priorität: 30.06.1998 DE 19829026
(71) Anmelder: ALCATEL, 75008 Paris (FR)
(72) Erfinder: Kaiser, Bernhard, 71665 Vaihingen/EnZ (DE)
(74) Vertreter: Zinsinger, Norbert

(57) **Zusammenfassung**

Die Erfindung betrifft ein Verfahren zur Bereitstellung eines Telekommunikationsdienstes in einem Telekommunikationsnetz (T_NET) sowie ein Dienstbereitstellungssystem (SDS) und einen Vermittlungsknoten (SSP1 bis SSP3) zur Durchführung des Verfahrens. Das Dienstbereitstellungssystem (SDS) ist mit einem globalen Dienststeuerknoten (GSCP1, GSCP2) zum Ausführen von Dienststeuerfunktionen und mit mehreren Vermittlungsknoten (SSP1 bis SSP3) versehen. Diese führen Dienstvermittlungsfunktionen aus, die durch Verbindungsanforderungen von Teilnehmern (A) des Telekommunikationsnetz (T_NET) veranlaßt werden, Dienstanforderungsnachrichten an Dienststeuerfunktionen zu senden, die jeweils die Ausführung eines Telekommunikationsdienstes steuern. Das Dienstbereitstellungssystem (SDS) ist weiter mit einem oder mit mehreren lokalen Dienststeuerknoten (LSCP1 bis LSCP4) zum Ausführen von Dienststeuerfunktionen versehen ist, wobei die lokalen Dienststeuerknoten (LSCP1 bis LSCP4) jeweils einem der Vermittlungsknoten (SSP1 bis SSP3) zugeordnet und mit diesem über einen lokalen Kommunikationsmechnismus (L_NET1 bis LNET_3) verbunden sind. Die einer Dienstvermittlungsfunktion zugeordnete Dienststeuerfunktion ist abhängig von dem jeweils von der Dienststeuerfunktion gesteuerten Telekommunikationsdienstes global in einem der globalen Dienststeuerknoten oder lokal in einem der lokalen Dienststeuerknoten installiert. Die Vermittlungsknoten (SSP1 bis SSP3) ermittelt jeweils für jede Dienstanforderungsnachricht, ob die zugeordnete Dienststeuerfunktion augenblicklich lokal oder global installiert ist und leitet die Dienstanforderungsnachricht entsprechend weiter.

## Beschreibung

Die Erfindung betrifft ein Dienstbereitstellungssystem für ein Telekommunikationsnetz nach dem Oberbegriff von Anspruch 1, einen Vermittlungsknoten für ein Telekommunikationsnetz nach dem Oberbegriff von Anspruch 10, und ein Verfahren zur Bereitstellung von Telekommunikationsdiensten nach dem Oberbegriff von Anspruch 11.

Die Erfindung geht von der Erbringung von Telekommunikationsdiensten gemäß der IN Architektur (IN = Intelligent Network) aus, wie sie beispielsweise in dem Artikel "Intelligent Network", Nachrichtentechnik, Elektronik, Berlin 40, 1990, Seiten 162 bis 164 beschrieben ist.

Ein globaler Dienststeuerknoten ist über das Nr. 7 Zeichengabenetz mit mehreren Dienstvermittlungsstellen verbunden. Der Dienststeuerknoten steuert für die mit ihm verbundenen Dienstvermittlungsstellen zentral die Erbringung von einem oder von mehreren Telekommunikationsdiensten. Bei den Dienstvermittlungsstellen handelt es sich um speziell ausgestattete Vermittlungsstellen eines Telekommunikationsnetzes. Empfängt eine dieser Vermittlungsstellen von einem Teilnehmer des Telekommunikationsnetzes eine spezieller Verbindungsanforderungen, so wird eine in der Vermittlungsstelle integrierte Dienstvermittlungsfunktion getriggert, die sodann eine Dienstanforderungsnachricht an den globalen Dienststeuerknoten sendet. Diese Dienstanforderungsnachricht triggert im Dienststeuerknoten die zugeordnete Dienstelogik, die dann die Erbringung des Telekommunikationsdienstes steuert, in dem sie beispielsweise die Dienstvermittlungsstelle anweist, die Verbindungsanforderung mit einer anderen Zielrufnummer weiterzuvermitteln oder ein Dienstunterstützungssystem ansteuert, das Sprachansagen anlegt. Die Kommunikation zwischen dem globalen Dienststeuerknoten und den Dienstvermittlungsstellen wird hierbei über das Nr. 7 Signalisierungsnetz geführt.

Der Erfindung liegt nun die Aufgabe zugrunde, die Leistungsfähigkeit der Dienstbereitstellung zu erhöhen.

Diese Aufgabe wird gelöst durch ein Dienstbereitstellungssystem für ein Telekommunikationsnetz nach der Lehre von Anspruch 1, einen Vermittlungsknoten für ein Telekommunikationsnetz nach der Lehre von Anspruch 10, und ein Verfahren zur Bereitstellung von Telekommunikationsdiensten nach der Lehre von Anspruch 11.

Der Erfindung liegt hierbei der Gedanke zugrunde, Dienstvermittlungsstellen neben der Anbindung an einen globalen Dienststeuerknoten zusätzlich an zugeordnete lokale Dienststeuerknoten über einen lokales Kommunikationsmechanismus anzubinden und die Dienstlogik für einen von einer Dienstvermittlungsstelle angeforderten Dienst abhängig von der Art des Dienstes wahlweise global in dem globalen Dienststeuerknoten oder lokal in dem zugeordneten lokalen Dienststeuerknoten zu installieren. Für jede Dienstvermittlungsstelle wird entschieden, für welche Dienste die Dienststeuerung von dem globalen in den zugeordneten lokalen Dienststeuerknoten transferiert wird. Für jede Dienstanforderung eines Dienstvermittlungsknotens wird bestimmt, ob der angeforderte Dienst im Augenblick von einem lokalen oder einem globalen Dienststeuerknoten gesteuert wird und die Kommunikation mit den Dienststeuerknoten wird entsprechend gesteuert.

Der Vorteil der Erfindung besteht zum einen darin, daß die Durchschnittszeit und der Durchschnittsaufwand für die Erbringung eines Telekommunikationsdienstes verringert wird. Ein an die jeweilige Dienstart angepaßter Dienststeuerknoten kann verwendetet werden. Die Vorteile eines globen Dienststeuerknotens (zentrale Diensterbringung, bessere Systemausnutzung) werden dienstspezifisch mit den Vorteilen eines lokalen Dienststeuerknotens (schnellere Kommunikationsanbindung) kombiniert. Eine Gruppierung spezieller Dienste mit gemeinsame Ressourcenausnutzung ist möglich.

Die Erfindung ist auch kostengünstig zu realisieren, da bestehenden Dienstvermittlungsfunktionen und Dienststeuerfunktionen in einem erfindungsgemäßen Dienstbereitstellungssystem wiederverwendet werden können.

Weiter wird durch die Erfindung die Belastung des Signalisierungsnetzes verringert.

Weitere Vorteile der Erfindung bestehen darin, daß die Anzahl der insgesamt parallel erbringbaren Dienste vergrößert wird und ein detailliertes Dienstmanagement möglich wird.

Weitere vorteilhafte Ausgestaltungen der Erfindung sind den Unteransprüchen zu entnehmen.

Hierbei ist es insbesondere vorteilhaft, die Zuordnung der Steuerung von Diensten zu lokalen oder globalen Dienststeuerknoten abhängig von Systemparametern des Telekommunikationsnetzes dynamisch zu verändern. Hierdurch ist es möglich, die Erbringung von Dienststeuerfunktionen optimal an den augenblicklichen Systemzustand anzupassen.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines erfindungsgemäßen Dienstbereitstellungssystems mit mehreren erfindungsgemäßen Vermittlungsknoten
- Fig. 2: zeigt ein Blockschaltbild eines Ausschnitts aus dem Dienstbereitstellungssystem nach Fig. 1.
- Fig. 3: zeigt eine funktionelle Darstellung eines erfindungsgemäßen Vermittlungsknotens nach Fig. 1.

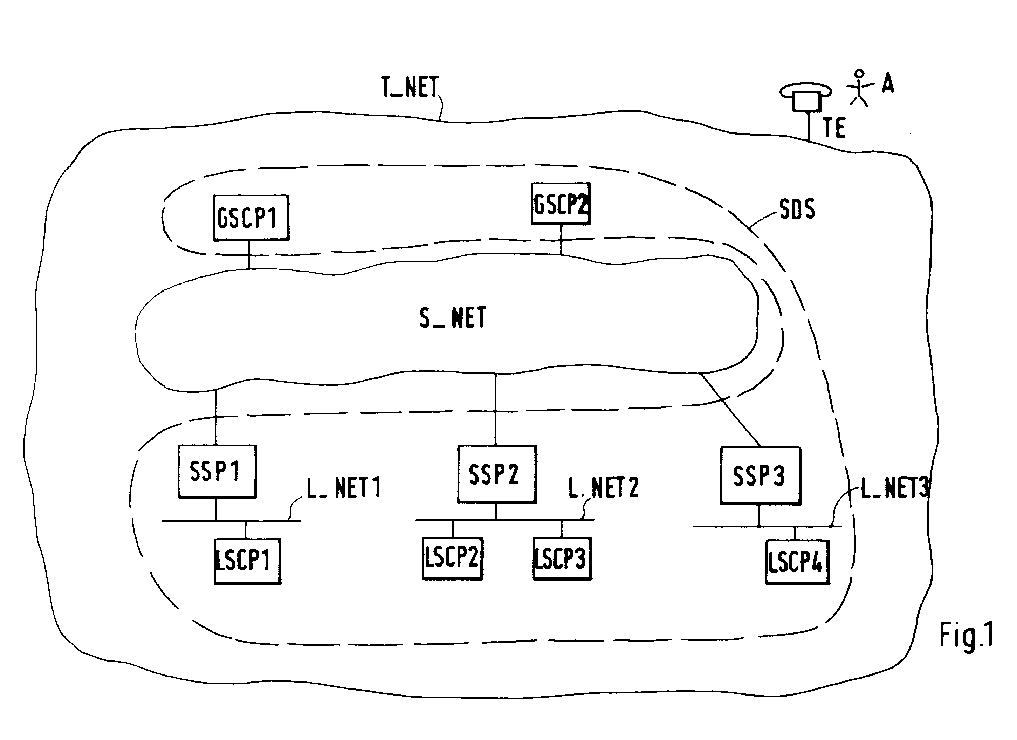

Fig. 1 zeigt eine Telekommunikationsnetz T_NET, mit dem ein Endgerät TE eines Teilnehmers A verbunden ist. Das Telekommunikationsnetz T_NET weist ein Signalisierungsnetz S_NET und ein Dienstbereitstellungssystem SDS auf, das seinerseits mehrere speziell ausgestaltetet Vermittlungsknoten SSP1 bis SSP3, mehrere globale Dienststeuerknoten GSCP1 bis GSCP2, mehrere lokale Dienststeuerknoten LSCP1 bis LSCP4 und mehrere lokale Kommunikationsnetz L_NET1 bis L_NET3 aufweist.

Das Telekommunikationsnetz T_NET weist neben den Vermittlungsknoten SSP1 bis SSP3 noch eine Vielzahl weiterer Vermittlungsknoten auf. Es ist hierbei natürlich auch möglich, daß diese Vermittlungsknoten unterschiedlichen Netzbetreibern zugeordnet sind.

Die Vermittlungsknoten SSP1 bis SSP3 sind jeweils mit dem Signalisierungsnetz S_NET und mit den lokalen Kommunikationsnetzen L_NET1, L_NET2 bzw. L_NET3 verbunden, mit denen auch die lokalen Dienststeuerknoten LSCP1, LSCP2 und LSCP3 bzw. LSCP4 verbunden sind. Die Zahl der Vermittlungsknoten SSP1 bis SSP3 und der globalen Dienststeuerknoten GSCP1 bis GSCP2 ist beispielhaft gewählt, es ist jedoch zumindest ein solcher Vermittlungsknoten und ein solcher globaler Dienststeuerknoten mit dem Signalisierungsnetz S_NET verbunden. Die lokalen Dienststeuerknoten LSCP1 bis LSCP4 sind vorteilhafterweise räumlich sehr nah bei dem zugeordneten lokalen Vermittlungsknoten SSP1, SSP2 bzw. SSP3 angeordnet, sie bilden beispielsweise verschiedene Komponenten ein und derselben Vermittlungsstelle (Vermittlungsstelle im räumlichen Sinn).

Das Signalisierungsnetz S_NET wird von einem Nr. 7 Signalisierungsnetz gebildet. Es ist auch möglich, daß die globalen Dienststeuerknoten GSCP1 und GSCP2 mit den Vermittlungsknoten SSP1 bis SSP3 über ein anderes Weitverkehrskommunikationsnetz verbunden werden, beispielsweise über ATM- oder DQDB Datennetze (ATM = Asynchronous Transfer Mode, DQDB = Distributed Queue Dual Bus).

Die lokalen Dienststeuerknoten LSCP1 bis LSCP4 steuern für die jeweils mit ihnen verbundenen Vermittlungsknoten SSP1, SSP2 bzw. SSP3 die Erbringung einer ersten Gruppe von Telekommunikationsdiensten. Die globalen Dienststeuerknoten GSCP1 bis GSCP2 steuern zentral für alle Vermittlungsknoten SSP1 bis SSP3 die Erbringung einer zweiten Gruppe von Telekommunikationsdiensten. Abhängig von der Art eines Telekommunikationsdienstes ist hierbei die Dienstlogik für die Dienststeuerung entweder lokal oder global installiert, wobei die Installation von Vermittlungsknoten zu Vermittlungsknoten unterschiedlich sein kann. Bei jeder Dienstanforderung wird in den Vermittlungsknoten ermittelt, ob die Steuerung des angeforderte Dienstes im Augenblick lokal oder global installiert ist und die Dienstanforderung wird entsprechend geleitet.

Es ist vorteilhaft, grundsätzlich die Dienssteurfunktionen für alle Dienste global zu installieren und nur in folgenden Fällen die Dienststeuerung für den jeweiligen Vermittlungsknoten lokal zu installieren:

Die Dienssteuerfunktionen für Telekommunikationsdienste, die häufig von einem Vermittlungsknoten durchzuführen sind, sind für diesen Vermittlungsknoten lokal zu installieren.

Die Dienssteuerfunktionen für teilnehmerspezifische Dienste sind lokal zu installieren. Teilnehmerspezifische Dienste sind solche Dienste, die enger mit den von einer Vermittlungsstelle bedienten Teilnehmern verbunden sind und somit beispielsweise Zugriff auf teilnehmerspezifische Daten zur Diensterbringung benötigen oder nicht oder nur selten von anderen Vermittlungsknoten angefordert werden. Beispiele für solche Dienste sind: "Virtuell Private Network" Dienste, "Number Portability" Dienste, "Flexible Tariffing" Dienste, "Subscriber Screening" Dienste.

Da sich die von solchen Diensten benötigten Daten oft überschneiden, ist es vorteilhaft, wenn deren Dienssteuerfunktionen auf eine gemeinsame Datenbank zugreifen. Es ist weiter vorteilhaft, wenn ihnen Zugriff auf die Teilnehmerdatenbank des zugeordneten Vermittlungsknotens ermöglicht wird.

Die Dienssteuerfunktionen für Dienste, die zur Diensterbringung spezielle Daten benötigen, die auch in einem Vermittlungsknoten abgespeichert sind, sind lokal für diese Vermittlungsknoten lokal zu installieren. Dies ist jedoch nur dann vorteilhaft, wenn der lokale Dienststeuerknoten auf dies Daten des Vermittlungsknotens zugreifen kann.

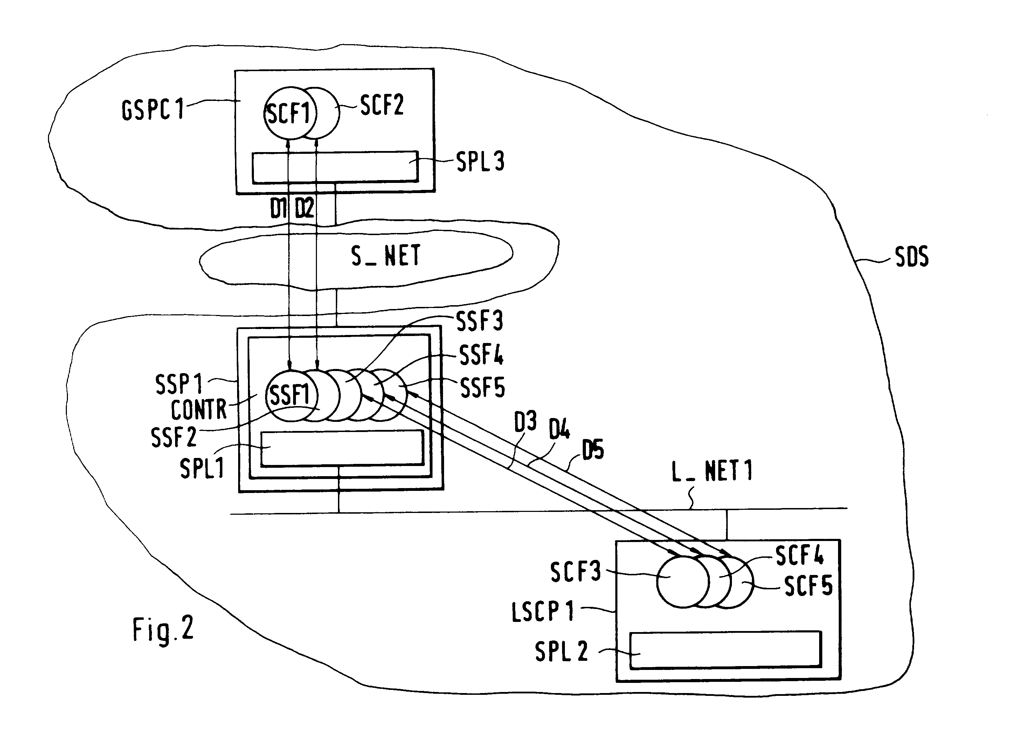

Im folgenden wird der Aufbau der speziell ausgestalteten Vermittlungsknoten SSP1 bis SSP3, der Dienststeuerknoten GSCP1 bis GSCP2 und LSCP1 bis LSCP3 und der Kommunikationsnetze L_NET1 BIS L_NET3 anhand von Fig. 2 beispielhaft erläutert.

Fig. 2 zeigt das Signalisierungsnetz S_NET und das Dienstbereitstellungssystem SDS mit den Dienststeuerknoten GSCP1 und LSCP1, und dem lokalen Kommunikationsnetz L_NET1.

Bei dem Vermittlungsknoten SSP1 handelt es sich um einen Fernsprechvermittlungsknoten, beispielsweise den Vermittlungsknoten Alcatel1000S12. Es ist natürlich auch möglich, daß es sich bei dem Vermittlungsknoten SSP1 um einen Vermittlungsknoten handelt, der neben Fernsprechverbindungen auch Bildfernsprech- und/oder Datenverbindungen vermittelt.

Der Vermittlungsknoten SSP1 verfügt über Anschlußbaugruppen zum Anschluß von Teilnehmeranschlußleitungen und/oder Anschlußleitungen zu anderen Vermittlungsknoten des Telekommunikationsnetzes T_NET, über ein Koppel netz zum Schalten von Verbindungen zwischen den Anschlußbaugruppen und über eine Steuerung CONTR, die u. a. den Aufbau von Verbindungen und die Signalisierung mit Teilnehmern und anderen Vermittlungsknoten steuert. Es ist auch möglich, daß die Anschlußbaugruppen dem Anschluß mobiler Teilnehmer dienen. Von den Komponenten des Vermittlungsknotens unterscheidet sich in diesem Ausführungsbeispiel lediglich die Steuerung CONTR von den entsprechenden Komponenten eines üblichen Vermittlungsknotens. Die Steuerung CONTR basiert auf einem Rechnersystem mit entsprechenden peripheren Baugruppen, das aus einem leistungsstarken Zentralrechner oder auch aus mehreren über ein internes Kommunikationsnetz verbundenen Einzelrechnern aufgebaut ist. Auf dieses Rechnersystem setzt sodann eine Betriebssystemplattform auf, auf der Steuerprogramme aufsetzen, die die Funktionen des Vermittlungsknotens SSP steuern. Die Betriebssystemplattform basiert hierbei vorteilhafterweise auf einem speziell für die Anforderungen eines Vermittlungsknotens zugeschnittenes Echtzeitbetriebssystem. Das Rechnersystem und die Betriebssystemplattform bilden zusammen für die auf ihnen aufsetzenden Steuerprogramme eine System plattform SPL1. Von den von diesen Steuerprogrammen erbrachten Funktionen sind in Fig. 2 beispielhaft fünf Funktion SSF1 bis SSF5 gezeigt.

Die Funktionen SSF1 bis SSF5 stellt eine Dienstvermittlungsfunktionen dar. Sie überwachen jeweils Verbindungsanforderung von Teilnehmern des Telekommunikationsnetzes T_NET, die über den Vermittlungsknoten SSP geleitet werden. Wenn sie eine spezielle Verbindungsanforderung erkennen, die die Ausführung eines Telekommunikationsdienstes bedingt, so kommuniziert sie mit der diesem Telekommunikationsdienst zugeordneten Dienststeuerfunktion. Kriterium für eine spezielle Verbindungsanforderung kann beispielsweise die in die Verbindungsanforderung eingetragene Rufnummer des gerufenen Teilnehmers oder auch der rufende Teilnehmer sein, der sie gesendet hat. Weiter führen sie die Instruktion der Dienststeuerfunktion durch, leiten beispielsweise die Verbindungsanforderung an einen anderen Zielteilnehmer weiter oder bauen einen Nutzkanal zu dem rufenden Teilnehmer auf.

Die Dienststeuerknoten LSCP1 und GSCP1 weisen jeweils eine Systemplattform SPL2 bzw. SPL3 auf, die jeweils von einem oder mehreren miteinander verbundenen Rechnern und von einer oder mehreren auf diesen aufsetzenden Betriebssystemplattformen gebildet werden. Als Betriebssystem findet hierbei beispielsweise ein UNIX Betriebssystem Verwendung, auf das eine an die spezielle Funktion der Dienststeuerknoten LSCP1 und LSCP2 angepaßte Middelware aufsetzt, beispielsweise die Alcatel Nectar Telecom Middelware. Von den von den auf den Betriebsystemplattformen SPL2 und SPL3 aufsetzenden Steuerprogrammen erbrachten Funktionen sind in Fig. 2 lediglich jeweils drei Funktionen SCF3 bis SCF5 bzw. SCF1 bis SCF2 gezeigt.

Die Funktionen SCF1 bis SCF5 stellen jeweils Dienststeuerfunktionen für unterschiedliche Telekommunikationsdienste dar. Getriggert durch eine Dienstanforderungsnachricht von einer Dienstvermittlungsfunktion steuern sie jeweils die Erbringung des jeweiligen Telekommunikationsdienstes. Die Funktionen SCF1 bis SCF5 steuern die Erbringung des Telekommunikationsdienstes hierbei gemäß des für den jeweiligen Dienst im Dienststeuerknoten GSCP1 bzw. LSCP1 installierten Dienstlogikprogramms.

Das lokale Kommunikationsnetz L_NET1 wird von einem oder auch von mehreren LAN (Local Area Network) gebildet. Beispiele für ein LAN sind Ethernet-, Fast-Ethernet-, Token-Ring- und FDDI-Netze. Es ist auch möglich, daß der lokale Dienststeuerknoten LSCP1 in die Steuerung des Vermittlungsknotens SSP1 integriert ist und dessen Funktionen auf deren Systemplattform SPL1 ausgeführt werden. In diesem Fall kann auf das lokale Kommunikationsnetz L_NET1 auch verzichtet werden.

Der Teilnehmer A sendet mittels seines Endgeräts TE eine Verbindungsanforderung an das Telekommunikationsnetz T_NET. Die Verbindungsanforderung wird durch das Telekommunikationsnetz T_NET zum Vermittlungsknoten SSP1 geleitet. Die Funktion SSF1 erkennt, daß ein erster Telekommunikationsdienst für diese Verbindungsanforderung zu erbringen ist. Für die von der Funktion SSF1 daraufhin gesendet Dienstanforderungsnachricht wird sodann ermittelt, ob der angeforderte Dienst lokal oder global installiert ist. Der Dienst und somit die zur Steurung der Erbringung dieses Diestens ausgeführten Dienststeuerfunktionen sindt global installiert und so wird die Dienstanforderungsnachricht über das Signalisierungsnetz S_NET an den Dienststeuerknoten GSCP1 geleitet. Die Dienstanforderungsnachricht triggert die Funktion SCF1, die sodann in einem Dialog D1 die Erbringung des Telekommunikationsdienstes steuert. Parallel zu der Funktion SSF1 werden die Funktionen SSF2 bis SSF5 von Verbindungsanforderungen anderer Teilnehmer getriggert, Dienstanforderungsnachrichten zu senden, die unterschiedliche zweit, dritte, vierte bzw. fünfte Dienste anfordern. Der zweite Dienst ist global, die dritten bis fünften Dienste sind lokal installiert und so werden die Dienstanforderungsnachrichten entsprechend an den globalen Dienststeuerknoten GSPC1 bzw. an den lokalen Dienststeuerknoten LSCP1 geleitet. Die Dienstanforderungsnachrichten triggern die Dienststeuerfunktionen SCF2 bis SCF5, die sodann in einem Dialog D2, D3, D4 bzw. D5 die Erbringung des jeweils angeforderten Telekommunikationsdienstes steuern. Die Dialoge D1 bis D5 bestehen hierbei im Austausch von INAP Nachrichten (INAP = Intelligent Network Applications Protocol). Für die Funktionen SSF1 bis SSF5 selbst ist die globale oder lokale Installierung der zugeordneten Dienssteuerfunktionen SCP1 bis SCP5 transparent.

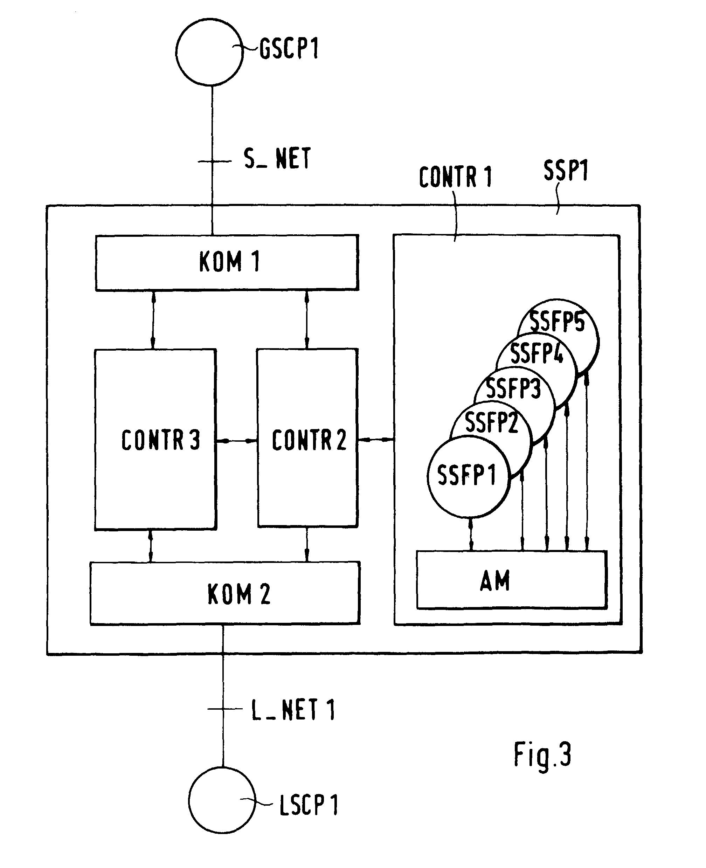

Anhand von Fig. 3 wird nun beispielhaft der funktionelle Aufbau des Vermittlungsknotens SSP1 verdeutlicht.

Fig. 3 zeigt den globalen Dienststeuerknoten GSCP1, den lokalen Dienststeuerknoten LSCP1 und den mit ihnen verbundenen Vermittlungsknoten SSP1 mit zwei Kommunikationseinheiten KOM1 und KOM2 und drei Steuereinheiten CONTR1 bis CONTR3.

Die Steuereinheit CONTR 1 erbringt die von der Steuerung CONTR ausgeführten Dienstvermittlungsfunktionen.

Sie weist eine Bearbeitungseinheit AM und mehrere Dienstvermittlungsprozesse SSFP1 bis SSFP5 auf.

Die Dienstvermittlungsprozesse SSFP1 bis SSFP5 stellen jeweils den Ablauf einer Dienstvermittlungsfunktion dar, die von der Steuerung CONTR ausgeführt wird. Die Bearbeitungseinheit AM koordiniert und steuert die Abarbeitung dieser Prozesse. Die Dienstvermittlungsprozesse SSFP1 bis SSFP5 kommunizieren für die Diensterbringung mit dienstspezifischen Dienststeuerprozessen in den Dienststeuerknoten GSCP1 oder LSCP1, die die Ausführung eines Dienstlogikprogramms im Rahmen der Erbringung der Dienststeuerfunktion darstellen. Die Dienststeuerfunktionen und die Dienstvermittlungsfunktionen interagieren hierbei mittels des INAP Protokolls (INAP = Intelligent Network Applications Protocol), mittels dem Dienstvermittlungsfunktionen und Dienststeuerfunktionen gemäß der IN-Architektur interagieren. Die im Rahmen dieses Protokolls ausgetauschten IN-Applikationsnachrichten (INAP Nachrichten) sowie die grundlegend Dienste und Aktionen dieses Protokolls werden beispielsweise in der Empfehlung ITU-T Q.1219, Kapitel 6.5. Intelligent Network Applications Protokoll, Seite 26 bis 40 und detaillierter in der Empfehlung ITU-T Q.1219 für IN CS-1 erläutert. Die von den Dienstvermittlungsprozessen SSFP1 bis SSFP5 erbrachten Dienstvermittlungsfunktionen stellen vorteilhafterweise ebenso Dienstvermittlungsfunktionen gemäß der IN-Architektur dar.

Die Steuereinheit CONTR2 ermittelt für jede Dienstanforderungsnachricht, die von einer der von der Steuereinheit CONTR1 ausgeführten Dienstvermittlungsfunktionen an eine Dienststeuerfunktion gerichtet wird, ob die dem angeforderten Dienst zugeordnete Dienststeuerfunktion lokal oder global installiert ist. Ist sie global installiert, so leitet sie die Dienstanforderungsnachrichten mittels Zugriff auf die Kommunikationseinheit KOM1 über das Signalisierungsnetz S_NET an einen globalen Dienststeuerknoten weiter, ansonsten mittels Zugriff auf die Kommunikationseinheit KOM2 über das lokale Kommunikationsnetz L_NET1 an einen lokalen Dienststeuerknoten weiter. Die bei der Erbringung des von einer Dienstanforderungsnachricht angeforderten Dienstes entstehenden weiteren zwischen Dienstvermittlungsfunktion und Dienststeuerfunktion ausgetauschte Nachrichten werden entsprechend wie diese Dienstanforderungsnachricht von der Steuereinheit CONTR2 umgeleitet.

Eine erste Möglichkeit der Durchführung dieser Funktion besteht darin, daß in der Dienstanforderungsnachricht und in den dieser folgenden Nachrichten bereits die Adresse eines globalen Dienststeuerknotens eingetragen ist, der normalerweise die Dienststeuerfunktion für den angeforderten Dienst erbringt. Die Steuereinheit CONTR2 greift auf eine Datenbank zu, in der vermerkt ist, welche Dienste in welchen globalen Dienststeuerknoten für die Dienstvermittlungsfunktionen des Vermittlungsknotens SSP1 von einer globalen in eine lokale Installierung transferiert worden sind. Ist die Dienstanforderungsnachricht an solch einen Dienst eines solchen Dienststeuerknotens gerichtet, so werden die Dienstanforderungsnachricht und die dem folgenden Dialog zugeordneten Nachrichten an den lokalen Dienststeuerknoten LSCP1 umgeleitet. Ansonsten werden die Dienstanforderungsnachricht und die dem folgenden Dialog zugeordneten Nachrichten unverändert an den adressierten globalen Dienststeuerknoten geleitet. Es ist auch möglich, daß die Fälle, in denen eine Umleitung auf den Dienststeuerknoten LSCP1 notwendig sind, nur anhand des angeforderten Dienstes ermittelt werden.

Eine zweite Möglichkeit der Durchführung dieser Funktion besteht darin, daß in der Dienstanforderungsnachricht noch kein Dienststeuerknoten für die Durchführung der Dienststeuerfunktion lokalisiert ist. Die Steuereinheit CONTR2 greift nun auf eine Datenbank zu, in der für alle Dienste, die von den Dienstvermittlungsfunktionen des Vermittlungsknoten SSP1 angefordert werden können, der zugeordnete Dienststeuerknoten adressiert ist und angegeben ist (auch implizit) ob es sich bei diesen Dienststeuerknoten um einen lokalen oder um einen globalen Dienststeuerknoten handelt. Wird so ein lokaler Dienststeuerknoten ermittelt, so werden die Dienstanforderungsnachricht und die dem folgenden Dialog zugeordneten Nachrichten mittels Zugriff auf die Kommunikationseinheit KOM2 an den adressierten lokalen Dienststeuerknoten LSCP1 geleitet. Ansonsten werden die Dienstanforderungsnachricht und die dem folgenden Dialog zugeordneten Nachrichten mittels Zugriff auf die Kommunikationseinheit KOM1 an den adressierten globalen Dienststeuerknoten geleitet. Die Adressierung des Dienststeuerknotens und die Steuerung der entsprechenden Transportprotokollschichten wird somit eigenständig von der Steuereinheit CONTR2 mittels Zugriff auf die Kommunikationseinheit KOM1 und KOM2 vorgenommen.

Es ist auch möglich, daß in diesem Fall in der Datenbank mehrere globale Dienststeuerknoten bzw. mehrere lokale Dienststeuerknoten für einen Dienst eingetragen sind und die Steureinheit CONTR2 dynamisch einen dieser Dienststeuerknoten beispielsweise unter Beachtung einer gleichmäßigen Lastverteilung dynamisch auswählt.

Die Datenbank, auf die die Steuereinheit CONTR2 zugreift, ist eine Datenbank des Vermittlungsknotens SSP1. Es ist auch möglich, daß es sich bei dieser Datenbank um eine zentrale Datenbank beispielsweise einer Dienstverwaltungseinrichtung handelt.

Die Kommunikationseinheit KOM1 stellt die Protokollbearbeitungseinheiten zur sende- und empfangsseitige Abwicklung des Transports von INAP-Nachrichten (INAP = Intelligent Network Applikation Part) über das Signalisierungsnetz Nr. 7 und die entsprechenden physikalischen Anschlußbaugruppen bereit. Die INAP Nachrichten werden hierbei mittels des TCAP Protokolls (TCAP = Transport Capabilities Application Part) transportiert, das auf dem SCCP Protokoll (SCCP = Signalling Connection Control Part) und auf dem MTP Protokoll (MTP = Message Transfer Part) aufsetzt.

Die Kommunikationseinheit KOM2 stellt die hard- und softwaremäßigen Funktionsgruppen für den Transport von INAP-Nachrichten (INAP = Intelligent Network Applikation Part) über das lokale Kommunikationsnetz L_NET1 bereit.

Hierzu verfügt die Kommunikationseinheit KOM2 über eine Protokollbearbeitungseinheit zur sende- und empfangsseitigen Abwicklung des TCAP -Protokolls des Nr. 7 ITU-T Signalisierungssystems (TCAP = Transport Capabilities Application Part). Diese Protokollbearbeitungseinheit setzt über eine Anpassungseinheit auf eine Protokollbearbeitungseinheit auf, die als Dienst den Transport von Nachrichten mittels eines LAN Protokolls über das lokale Kommunikationsnetz L_NET1 bereitstellt. Diese Protokollbearbeitungseinheit bearbeitet hierzu beispielsweise einen Protokollstack bei dem ein TCP/IP Protokoll (IP = Internet Protokoll, TCP = Transport Control Protocol). auf einem LAN MAC Protokoll (MAC = Medium Access Layer) aufsetzt.

Es ist auch möglich, daß die Kommunikationseinheit KOM2 über einen Interprozeß-Mechanismus, beispielsweise gemäß der CORBA-Architektur (CORBA = Common Object Request Broker Architekture) INAP-Nachrichten an den lokalen Dienststeuerknoten LSCP1 transportiert.

Es ist möglich, daß das TCAP-Protokoll von der Steuereinheit CONTR1 bearbeitet wird. Auch weitere Protokollschichten können bereits von der Steuereinheit CONTR1 bearbeitet werden. In diesem Fall enthält die Kommunikationseinheit KOM2 entsprechende "Brigding-Funktionen", um die Transportprotokolle in die entsprechenden LAN Transportprotokolle umzusetzen.

Die Steuereinheit CONTR3 steuert die lokale oder globale Installierung von Diensten für den Vermittlungsknoten SSP1. Mittels Steuersignalen veranlaßt sie, die Dienstlogik für einen speziellen Dienst in den lokalen Dienststeuerknoten LSCP1 herunterzuladen und zu aktivieren oder eine in dem lokalen Dienststeuerknoten zur Verfügung stehende Dienstlogik zu deaktivieren. Das Herunterladen einer Dienstlogik kann hierbei manuell oder online, beispielsweise mittels eines zentralen Servers erfolgen, in dem eine Vielzahl von Dienstlogika abgespeichert sind. Es ist auch möglich, daß die Steuereinheit in gleicher Weise das Herunterladen oder Deaktivieren von Dienstlogika in globale Dienststeuerknoten steuert. Hat die Steuereinheit die globale oder lokale Installierung eines Dienstes derart verändert, so ändert sie die entsprechenden Daten in der Datenbank, auf die die Steuereinheit CONTR2 zur Ermittlung der globalen oder lokalen Installierung von Dienststeuerfunktionen zugreift.

Es ist weiter vorteilhaft, daß die Steuereinheit CONTR3 bestimmte Parameter des Telekommunikationsnetzes T_NET überwacht und mittels Auswertung dieser Parameter über die lokale oder globale Installierung von Diensten für den Vermittlungsknoten SSP1 entscheidet. Eine solche Entscheidung kann bei der erstmaligen Installation eines Dienstes oder dynamisch im laufenden Betrieb erfolgen, wenn sich Parameter verändern. Ein solcher Parameter kann beispielsweise sein, wie oft die Erbringung eines Telekommunikationsdienstes von dem Vermittlungsknoten SSP1 pro Zeiteinheit gefordert wird. Übersteigt dieser Wert eine gewisse Schwelle, so wird der Dienst lokal installiert. Unterschreitet der Wert eine Schwelle, so wird er wieder global installiert. Der Installationswechsel kann noch von folgenden Parameter abhängig gemacht werden: Auslastung der zentralen Dienststeuerknoten, Auslastung der lokalen Dienststeuerknoten, Auslastung des Signalisierungsnetz, geforderte Dienstgüte für Teilnehmer usw.

In gleicher Weise kann über die lokale oder globale Installation von teilnehmerspezifischen Diensten oder von Diensten entschieden, die bei der Diensterbringung Daten des Vermittlungsknotens SSP1 nutzen können. Der Installationswechsel kann hier von folgenden Parametern abhängig gemacht werden: Häufigkeit der Anforderung der Dienste in dem Vermittlungsknoten SSP1, Anzahl der bereits lokal installierten Dienste die ganz oder teilweise auf gleiche Daten zugreifen, Auslastung der zentralen Dienststeuerknoten, Auslastung der lokalen Dienststeuerknoten, Auslastung des Signalisierungsnetzes, geforderte Dienstgüte für Teilnehmer usw.

Es ist auch möglich, daß die Steuereinheit CONTR3 Teil einer zentralen Einrichtung, beispielsweise Teil einer Dienstmanagementeinrichtung oder Netzwerkmanagementeinrichtung ist.

Auf die Steuereinheit CONTR3 kann natürlich auch verzichtet werden.

## Patentansprüche

1. Dienstbereitstellungssystem (SDS) für ein Telekommunikationsnetz (T_NET), mit mindestens einem globalen Dienststeuerknoten (GSCP1, GSCP2) zum Ausführen von Dienststeuerfunktionen und mit einem oder mehreren Vermittlungsknoten (SSP1 bis SSP3), die jeweils mit einer ersten Steuereinheit (CONTR1) versehen sind, die so ausgestaltet ist, daß sie Dienstvermittlungsfunktionen ausführt, die durch Verbindungsanforderungen von Teilnehmern (A) des Telekommunikationsnetz (T_NET) veranlaßt werden, Dienstanforderungsnachrichten an Dienststeuerfunktionen zu senden, die jeweils die Ausführung eines Telekommunikationsdienstes für den jeweiligen Teilnehmer steuern, wobei die globalen Dienststeuerknoten (GSCP1, GSCP2) mit den Vermittlungsknoten (SSP1 bis SSP3) über ein Weitverkehrskommunikationsnetz (S_NET) verbunden sind,
**dadurch gekennzeichnet,** daß das Dienstbereitstellungssystem (SDS) mit einem oder mit mehreren lokalen Dienststeuerknoten (LSCP1 bis LSCP4) zum Ausführen von Dienststeuerfunktionen versehen ist, wobei die lokalen Dienststeuerknoten (LSCP1 bis LSCP4) jeweils einem der Vermittlungsknoten (SSP1 bis SSP3) zugeordnet sind und jeweils über einen lokalen Kommunikationsmechnismus (L_NET1 bis LNET_3) mit dem zugeordneten Vermittlungsknoten (SSP1 bis SSP3) verbunden sind, daß die einer Dienstvermittlungsfunktion (SSF1 bis SSF5) zugeordnete Dienststeuerfunktion (SCF1 bis SCF5) abhängig von dem jeweils von der Dienststeuerfunktion (SCF1 bis SCF5) gesteuerten Telekommunikationsdienstes global in einem der globalen Dienststeuerknoten (GSCP1) oder lokal in einem der lokalen Dienststeuerknoten (LSCP1) installiert ist, und daß die Vermittlungsknoten (SSP1 bis SSP3) jeweils mit einer zweiten Steuereinheit (CONTR2) versehen sind, die so ausgestaltete ist, daß sie für jede Dienstanforderungsnachricht ermittelt, ob die zugeordnete Dienststeuerfunktion lokal oder global installiert ist und die Dienstanforderungsnachricht über das Weitverkehrskommunikationsnetz (S_NET) an einen globalen Dienststeuerpunkt (GSCP1) leitet, wenn die zugeordnete Dienststeuerfunktion (SCF1, SCF2) global installiert ist, und die Dienstanforderungsnachricht über den lokalen Kommunikationsmechanismus (L_NET1) an einen dem jeweiligen Vermittlungsknoten (SSP1) zugeordneten lokalen Dienststeuerknoten (LSCP1) leitet, wenn die zugeordnete Dienststeuerfunktion (SCF3 bis SCF5) lokal installiert ist.

2. Dienstbereitstellungssystem (SDS) nach Anspruch 1, dadurch gekennzeichnet, daß Dienststeuerfunktionen für teilnehmerspezische Dienste lokal installiert sind.

3. Dienstbereitstellungssystem (SDS) nach Anspruch 1, dadurch gekennzeichnet, daß Dienststeuerfunktionen für Dienste, die in einem Vermittlungsknoten gespeicherte Daten zur Diensterbringung benötigen, lokal installiert sind.

4. Dienstbereitstellungssystem (SDS) nach Anspruch 1, dadurch gekennzeichnet, daß Dienststeuerfunktionen für von einem Vermittlungsknoten häufig angeforderte Dienste für diesen Vermittlungsknoten lokal installiert sind.

5. Dienstbereitstellungssystem (SDS) nach Anspruch 1, dadurch gekennzeichnet, daß das Dienstbereitstellungssystem (SDS) mit einer dritten Steuereinheit (CONTR3) versehen ist, die so ausgestaltet ist, daß sie die globale oder lokale Installierung von Dienststeuerfunktionen für Dienstvermittlungsfunktionen steuert.

6. Dienstbereitstellungssystem (SDS) nach Anspruch 5, dadurch gekennzeichnet, daß die dritte Steuereinheit (CONTR3) weiter so ausgestaltet ist, daß sie abhängig von Parametern des Telekommunikationsnetzes (T_NET) dynamisch eine globale oder lokale Installierung von Dienststeuerfunktion ermittelt.

7. Dienstbereitstellungssystem nach Anspruch 1, dadurch gekennzeichnet, daß der lokale Kommunikationsmechanismus ein Interprozeß-Kommunikationsmechanismus ist.

8. Dienstbereitstellungssystem (SDS) nach Anspruch 1, dadurch gekennzeichnet, daß der lokale Kommunikationsmechanismus (L_NET1 bis L_NET3) eine Verbindung über ein LAN ist.

9. Dienstbereitstellungssystem (SDS) nach Anspruch 1, dadurch gekennzeichnet, daß die erste Steuereinheit (CONTR1) und die lokalen und globalen Dienststeuerknoten (GSCP1 bis GSCP2, LSCP1 bis LSCP4) so ausgestaltet sind, daß die Dienstvermittlungsfunktionen mit den lokal und mit den global installierten Dienststeuerfunktionen in gleicher Weise mittels INAP Nachrichten interagieren und keine Kenntnisse über die lokale oder globale Installierung von Dienststeuerfunktionen benötigen.

10. Vermittlungsknoten (SSP1) für ein Telekommunikationsnetz (T_NET), mit einer ersten Kommunikationseinheit (KOM1) zur Kommunikation mit mindestens einem globalen Dienstststeuerknoten (GSCP1) über ein Weitverkehrskommunikationsnetz (S_NET) und mit einer ersten Steuereinheit (CONTR1) zum Ausführen von Dienstvermittlungsfunktionen (SSF1 bis SSF5), die durch Verbindungsanforderungen von Teilnehmern (A) des Telekommunikationsnetz (T_NET) veranlaßt werden, Dienstanforderungsnachrichten an Dienststeuerfunktionen zu senden, die jeweils die Ausführung eines Telekommunikationsdienstes für den jeweiligen Teilnehmer steuern,
**dadurch gekennzeichnet,** daß der Vermittlungsknoten (SSP1) mit einer zweiten Kommunikationseinheit (KOM2) zur Kommunikation mit mindestens einem lokalen Dienstststeuerknoten (LSCP1) über einen lokalen Kommunikationsmechanismus (L_NET1) und mit einer zweiten Steuereinheit (CONTR2) versehen ist, die so ausgestaltete ist, daß sie für jede der Dienstanforderungsnachrichten ermittelt, ob die zugeordnete Dienststeuerfunktion lokal oder global installiert ist, wobei die einer Dienstvermittlungsfunktion (SSF1 bis SSF5) zugeordnete Dienststeuerfunktion (SCF1 bis SCF5) abhängig von dem jeweils von der Dienststeuerfunktion (SCF1 bis SCF5) gesteuerten Telekommunikationsdienstes lokal oder lokal installiert ist, und daß die zweite Steuereinheit (CONTR2) weiter so ausgestaltete ist, daß sie die Dienstanforderungsnachricht mittels der ersten Kommunikationseinheit (KOM1) über das Weitverkehrskommunikationsnetz (S_NET) an einen globalen Dienststeuerpunkt (GSCP1) leitet, wenn die zugeordnete Dienststeuerfunktion (SCF1, SCF2) global installiert ist, und die Dienstanforderungsnachricht mittels der zweiten Kommunikationseinheit (KOM2) über den lokalen Kommunikationsmechanismus (L_NET1) an einen dem Vermittlungsknoten zugeordneten lokalen Dienststeuerknoten (LSCP1) leitet, wenn die zugeordnete Dienststeuerfunktion (SCF3 bis SCF5) lokal installiert ist.

11. Verfahren, um Teilnehmern (A) eines Kommunikationsnetzes (T_NET) Telekommunikationsdienste bereitzustellen, wobei bei dem Verfahren durch eine Verbindungsanforderung eines Teilnehmers (A) eine von der Steuerung (CONTR) eines Vermittlungsknotens (SSP1) des Telekommunikationsnetzes (T_NET) ausgeführte Dienstvermittlungsfunktion veranlaßt wird, eine Dienstanforderungsnachricht an eine Dienststeuerfunktion zu senden, worauf die Dienststeuerfunktion die Erbringung des Telekommunikationsdienstes steuert,
**dadurch gekennzeichnet,** daß die Steuerung (CONTR) für jede Dienstanforderungsnachricht aus dem jeweils von der Dienstanforderungsnachricht angeforderten Telekommunikationsdienst ermittelt, ob die der Dienstanforderungsnachricht zuzuordnende Dienststeuerfunktion global oder lokal installiert ist, und daß die Steuerung (CONTR) die Dienstanforderung über ein Weitverkehrskommunikationsnetz (S_NET) an einen globalen Dienststeuerpunkt (GSCP1) sendet und mit dem globalen Dienststeuerpunkt (GSCP1) über das Weitverkehrskommunikationsnetz (S_NET) zur Diensterbringung kommuniziert, wenn die zuzuordnende Dienststeuerfunktion (SCF1, SCF2) global installiert ist, und die Steuerung (CONTR) die Dienstanforderung über einen lokalen Kommunikationsmechanismus (L_NET1) an einen dem Vermittlungsknoten (SSP1) zugeordneten lokalen Dienststeuerknoten (LSCP1) sendet und mit dem lokalen Dienststeuerknoten (LSCP1) zur Diensterbringung über den lokalen Kommunikationsmechanismus (L_NET1 BIS L_NET3) kommuniziert, wenn die zuzuordnende Dienststeuerfunktion (SCF3 bis SCF5) lokal installiert ist.
